Europäisches Patentamt

(19) European Patent Office

Office européen des brevets

(11) Publication number: **0 150 955**
A2

(12) # EUROPEAN PATENT APPLICATION

(21) Application number: 85300275.6

(22) Date of filing: 16.01.85

(51) Int. Cl.⁴: **B 21 J 15/02**, F 16 B 19/08

(30) Priority: **19.01.84 US 572566**

(43) Date of publication of application: **07.08.85**
**Bulletin 85/32**

(84) Designated Contracting States: **AT BE CH DE FR GB IT
LI LU NL SE**

(71) Applicant: **AIR INDUSTRIES CORPORATION,
12570 Knott Street, Garden Grove California 92641 (US)**

(72) Inventor: **Mosdale, Brian Eric, 1784 Crestview Avenue,
Seal Beach California 90740 (US)**

(74) Representative: **Rushton, Ronald et al, SOMMERVILLE
& RUSHTON 11 Holywell Hill, St. Albans Hertfordshire
AL1 1EZ (GB)**

(54) **Cavity rivet installation.**

㊼ A cavity rivet (10) is installed using a tool (18) having a
frustum shaped anvil portion (22) that deforms or upsets an
annular wall forming the cavity (16) in the end of the rivet. The
tool (18) also has an anvil pin (20) that is inserted into the rivet
cavity (16) to prevent the deformed material from entering the
cavity (16) while the frustum (22) deforms the rivet material.
This forces the deformed material to take the shape directed by
an anvil head portion (22) surrounding the frustum (22). Con-
trolling the force which the anvil pin (20) exerts on the rivet
cavity (16) and controlling the size of the cavity (16) in the rivet
(10) limits the expansion of the rivet shank (15) as the de-
formed rivet head (13) is formed.

EP 0 150 955 A2

ACTORUM AG

CAVITY RIVET INSTALLATION

This invention pertains to the art of riveting, particularly in the aircraft industry. In the early days of metal aircraft, the aluminum structures were fastened together by rivets composed of relatively soft aluminum alloys. Later developments allowed the use of harder and stronger aluminum alloys and eventually extended to include the use of even harder, non-aluminum materials such as titanium and stainless steels. Conventional wisdom has always sought to have an interference fit' between the rivet and the material being fastened. The interference fit was particularly felt necessary when the rivet was to be placed in shear.

This interference fit was not necessarily achieved by forcing an oversized rivet through predrilled holes. More commonly, the shank of the rivet was allowed to expand when the head of the rivet was deformed or upset during installation. The shank expansion removed all clearance and resulted in the desired interference fit.

The use of interference fits on the rivets resulted in installation problems since the expansion of the rivet tended to expand the material immediately surrounding the rivet hole. This material expansion in turn tended to bow the riveted sheets if there were any substantial number of aligned rivets in the sheet. While various manufacturing techniques could be used to minimize this bowing problem, these techniques still resulted in the accumulation of residual stresses in the riveted structure. There thus exists a need for a riveting technique which will not result in accumulated stresses.

The force required to deform or upset a solid rivet increases almost linearly with respect to the upset deformation. The use of harder materials in rivets required a greater force to upset the rivets. The use of large forces in turn increased the likelihood of damaging the softer material being fastened by the rivets. There

-2-

was no readily convenient way to determine when the solid rivet had been sufficiently upset so as to form a secure bond. The result was the need to develop expensive equipment to install solid rivets made of hard material, or alternately, to risk damaging the material being riveted. There thus exists the need for simple riveting techniques which can install high strength rivets without damaging the substrates being riveted.

One method of alleviating the need for high forces to upset rivets made of hard materials is disclosed in United States Patent No. 4,007,540, by Tyree. The Tyree patent discloses the use of a cavity in the upset end of the rivet so that less force was required to upset the rivet. The Tyree patent still teaches against the use of clearance fits between the rivet and the riveted structure. While Tyree's device reduces the amount of bow introduced into a riveted structure, it does not eliminate that deformation.

Another patent addressed to upsetting cavity type rivets is United States Patent No. 4,355,531, to Rosman. The Rosman patent teaches the use of a two part rivet whereby a "core pin" is placed in a rivet cavity to limit inward flow of the upset end which encapsulates the core pin. Varying the size of the "core pin" also facilitates the use of one rivet for use with panels of various thickness. The use of a two piece rivet is cumbersome and time consuming if the "core pin" is lost or fits improperly. If the core pin is improperly sealed during upsetting, then it is prone to vibration and abrasion of the surrounding rivet.

Modern technology has developed numerous composite materials such as graphite epoxy composites, which are gaining importance for use in the aircraft industry. These composites are, however, relatively soft in their transverse or thickness direction. Thus, even soft, solid titanium rivets are hard with respect to many composites

-3-

and improper installation of the rivets often damages the composites. Interference fits between the rivets and the holes in the composite also cause the composites to delaminate thereby weakening the structure. Since conventional riveting procedures result in expansion of the shank during installation, conventional riveting techniques are unsuitable for use with composites. Conventional riveting techniques also result in localized deformation of the work piece in the immediate vicinity of the upset end of the rivet. Since such deformation tends to delaminate the top layer of the composite. Conventional riveting technology is largely unsuitable for use with composites. There thus exists a need to develop rivet techniques suitable for use with composite materials.

Many common composites are also extremely sensitive to corrosion. Titanium and several titanium alloys provide the least corrosive fasteners for use with many composites. Several alloys, such as K Monel, are also suitable, although slightly corrosive. The major problem with all of these noncorrosive materials is that they tend to be hard materials requiring a large amount of force to upset and seat the rivets. The large force in turn increases the likelihood of damaging the softer substrates, especially if they are fragile composites. A need exists to develop techniques to install such rivets in fragile composite substrates.

The use of cavity rivets as disclosed by Tyree and Rosman can help alleviate the problems somewhat, but even they result in unacceptable shank expansion and deformation of the composites at the upset end. There thus exists a need for a rivet which has a controllable shank expansion during installation; whose formation of the upset head will not damage the substrate and which can be installed with a low upsetting force.

-4-

The present invention concerns an installation tool and procedure that results in the controlled deformation or upset of a cavity rivet head at a relatively low and constant force without damage to the substrate being riveted.

Briefly described, the tool of this invention forms rivet heads on rivets having a head, a shank, and a cavity in one end of the rivet. The tool has a projecting frustrum for deforming the cavity end of the rivet. A projecting member slidably extends through an aperture in the frustrum to be inserted into the cavity in the rivet when the tool is properly aligned with the rivet. The projecting member insures outward collapse of the cavity end of the rivet during deformation. A resilient member urges the projecting member through the aperture while allowing retraction of the projecting member as it is forced back through the aperture by contact with the bottom of the rivet cavity. The force exerted by the projecting member on the bottom of the rivet cavity cooperates with the force exerted by the tool on the cavity end of the rivet, and further cooperates with the size and location of the cavity in the rivet to insure that the deformed head begins formation at a desired location on the shank of the rivet and that the deformed head is properly formed.

The diameter and depth of a cavity in the end of the rivet opposite the preformed head affect the amount of force required to upset the cavity end of the rivet and allow the use of a far lower upsetting force than required for solid rivets. The cavity depth also affects the formation of the upset rivet head and in particular it affects the manner in which the material adjacent the rivet hole is deformed. If properly designed and installed, the cavity end buckles out and down during upsetting, with a fairly sharp transition between the solid shank and the cavity end of the rivet, thus minimizing the deformation of the top surface of the riveted substrate. Finally, the cavity depth affects the amount of shank expansion as the rivet is upset. If the cavity is too shallow, part of the shank is upset, if too deep, there is either not as sharp a demarcation between the shank and the upset head as is desirable or the external surface of the substrate adjacent the upset end is deformed. The rivet used in this invention controls these factors in a new and advantageous manner.

It is also possible to work harden the rivet shank in order to help control the permanent expansion of the shank and to facilitate upsetting of the only non-work hardened, cavity end of the rivet. Yet another variation is to undercut the shank diameter by a controlled amount to provide for either a predetermined clearance between the rivet and the substrate, or to provide for a controlled fit for a predetermined amount of shank expansion during rivet upsetting.

The installation tool has an anvil pin which is inserted into the cavity of the rivet in order to insure outward collapse or buckling of the cavity end of the rivet as the rivet is upset. The upsetting tool also includes a truncated cone or frustum surrounding the pin. Thus, the anvil pin centers the tool and causes the annular portion of the cavity rivet to collapse outward as the frustum upsets the cavity end of the rivet. Depending upon the type of upset head which is desired to be formed, the frustum may be recurved upon itself to control the expansion and shape of the upset head. This recurved portion of the frustum can take the form of a radially expanding cone which begins at the base of the frustum and whose largest diameter is towards the end of the upsetting frustum. The angle of recurvature affects not only the shape of the upset head, but also affects the amount of force required to upset the rivet.

-6-

This upsetting tool can be used in standard rivet guns or adapted for use in squeezer assemblies. Since the cavity in the end of the rivet results in a tubular or annular column which buckles during upsetting, the upsetting force can be almost constant during upsetting. Once the upset is near completion, the force begins to increase substantially, thereby providing an easy means for determining when the upsetting process has been completed. The use of a relatively low and constant upsetting force thus minimizes the damage to the substrate through which the rivet extends. Proper design of the upsetting tool will also insure that the upset material is always placed between the tool and the substrate and thereby minimize the chance that the tool will strike and damage the substrate.

These and other advantages of the present invention may best be understood through reference to the drawings in which:

FIGURE 1 shows the rivet of this invention about to be upset by the installation tool;

FIGURE 2 shows the rivet of this invention upset by the installation tool;

FIGURE 3 shows the head of an upset rivet of this invention;

FIGURE 4 shows a typical headed rivet installed in a composite substrate;

FIGURE 5 is a cross-sectional view of the installation tool;

FIGURE 6 shows a double flush installation of the rivet of this invention;

FIGURE 7 shows the head of the installation tool of this invention used to form the double flush rivet configuration as shown in FIGURE 6; and FIGURE 8 shows an alternate embodiment of the rivet of this invention having a reduced diameter shank.

-7-

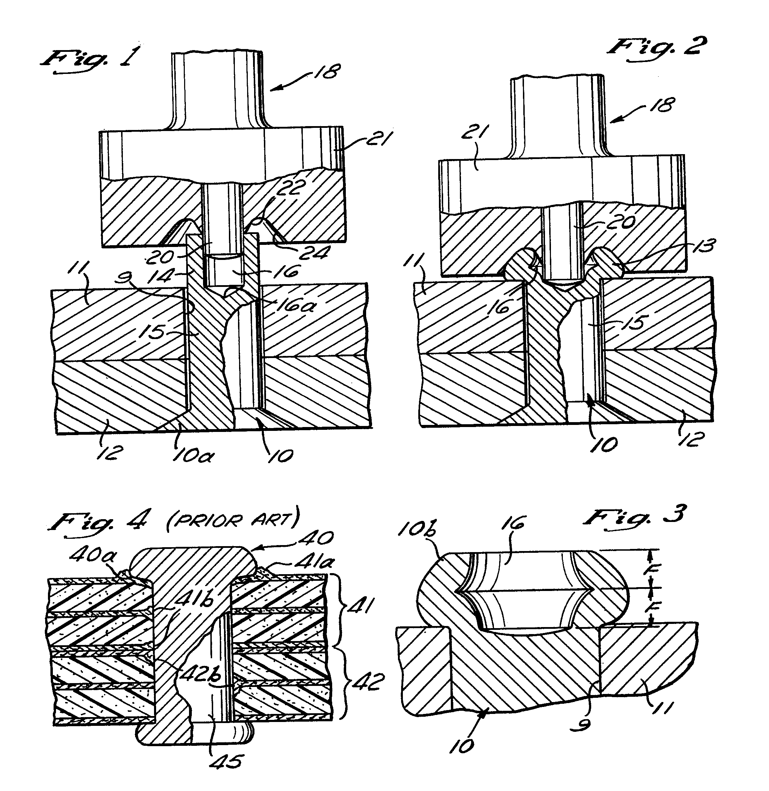

As shown in Figure 1, an installation tool (18) is aligned with, but not yet upsetting a rivet (10). An anvil pin (20) is aligned to coincide with a cavity (16) in the end of rivet (10). Figure 2 shows installation tool (18) forming an upset head on rivet (10). Rivet (10) is shown inserted into a hole (9) through structural substrates (11) and (12). The rivet (10) can have any conventional preformed head (10a) and is shown with a flush-mounted, counter sunk head in Figure 1 for purposes of illustration, not limitation. The preformed head serves to define the maximum insertion position of the rivet, which in turn defines the extent to which the cavity end (14) of the rivet projects above the adjacent substrate (11).

The rivet (10) of Figures 1 and 2 is shown in a clearance condition so that there is a space between the shank (15) and the substantially parallel, adjacent substrates (11) and (12). If the substrates (11) and (12) are metal, such as aluminum, this clearance condition is typically undesirable and would be eliminated by either sizing the rivet (10) for a snug fit in the hole (9) through the substrates (11) and (12), or alternately, for an interference fit before insertion or after upsetting is completed. If the substrates (11) and (12) are made of a composite material, such as graphite epoxy composite, it is desirable to maintain either a clearance fit as shown in Figure 1, or at most, a snug fit, even after installation is complete. An interference fit is not desirable with composites since it promotes delamination of the composite layers.

It should be understood that the invention is not limited to securing two sheets together as illustrated in Figure 1, but rather can be used to secure any number and any type of members to each other. Two sheets are shown merely for convenience of illustration, and not by way of limitation. Similarly, while this invention was developed

-8-

in the environment of the aerospace industry, it can of course be used wherever an appropriate rivet is used to secure at least two members or objects together.

The shape of the cavity (16) in the end of rivet (10) is typically cylindrical. The cavity (16) is typically concentric with the longitudinal axis of the rivet shank (15). Thus the more common shape of cavity end (14) is tubular. The cavity (16) as shown in Figure 1 has a conical end (16a) which would result if the cavity were drilled. The exact shape of the bottom of the cavity depends upon the method used to form the cavity, although a flattened bottom is preferable from a strength viewpoint. The cavity can be formed by any conventional method such as drilling, broaching, or integral casting. The exact method used to form the cavity (16) varies with the particular material used since the hardness of the material may control the most economical method of manufacture. It is desirable that the cavity (16) introduce the least practicable stress concentration into the upset rivet as such stress concentration could lead to premature failure of the riveted connection.

The depth of the cavity (16) varies with the diameter of the rivet (10), with the material used in the rivet, and with the type of upset head which is to be formed. Experimentation has shown that for materials such as titanium columbium (TiCb) alloys, or K Monel, having a shear strength in the neighborhood of 50,000 psi, the depth of the cavity (16) can be as much as .015 inches above or below the level of the adjacent substrate (11), without significant damage to relatively fragile substrates. For a cavity (16) having a conical bottom as illustrated in Figure 1, the cavity depth is measured from the end of the cylindrical side walls, not from the end of the conical bottom of the cavity.

If the bottom of cavity (16) is too far below the surface of the adjacent substrate (11), the strength of

-9-

shank (15) is lessened and there is a less sharply defined location for the initial lateral expansion of the deformed or upset head (13). If the bottom of cavity (16) is too far above the surface of the adjacent substrate (11), not only is part of the shank (15) upset, but the upset material tends to recurve around the shank (15) of the rivet (10). This radical recurvature tends to over work the upset material causing it to split or splay; it also forms stress concentrations adjacent to the shank which lead to premature failure of the rivet; and it also forms a weaker interface with the adjacent substrate (11), than would normally occur. It has been found that for TiCb alloy rivets having a shear strength in the neighborhood of 50,000 psi, and for rivet dimensions of Table I, shown below, the cavity depth should extend not more than about .015 inches above or below the surface level of the adjacent substrate (11). The letters A, B, and C refer to rivet cavity end dimensions illustrated on the rivet shown in Fig. 8. For double flush mounting as shown in Figure 7, and for rivet dimensions of Table II, shown below, using K monel, experimentation has shown that the depth of cavity (16) should not be above the surface level of the adjacent substrate (11), nor below the depth of the counter sunk hole in the substrate (11). Too deep of a cavity weakens the rivet (10) and degrades the aerodynamic surface of the rivet head. An insufficient cavity depth upsets the rivet shank (15) and also results in an improperly formed upset head (13) which is not flush.

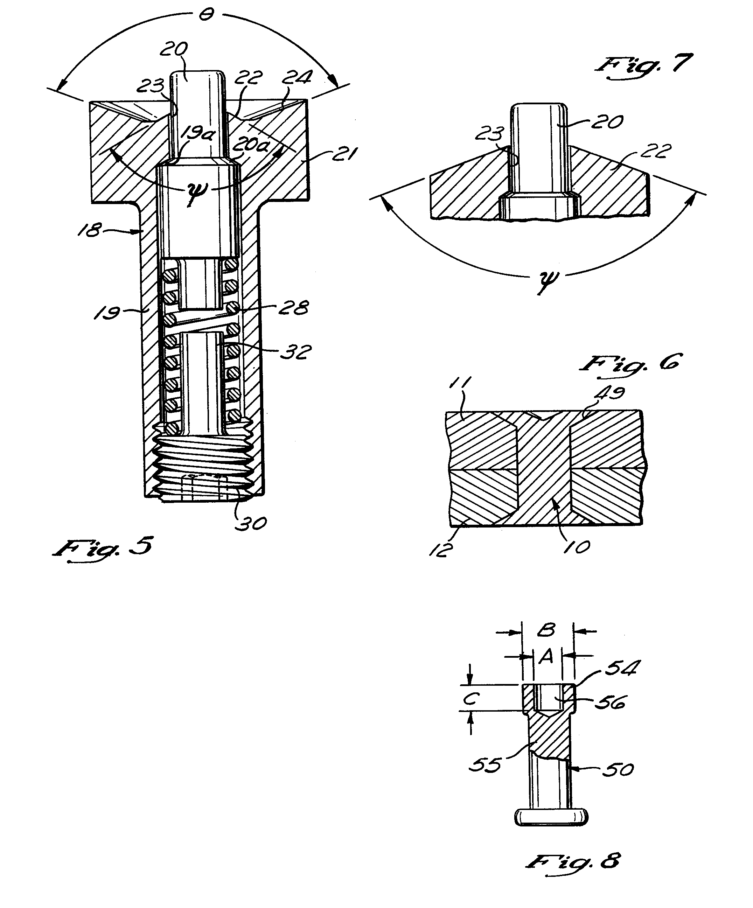

The typical upset rivet head (13) formed by this invention is illustrated in Figures 2 and 3. Note that there is relatively little deformation of the substrate (11) immediately adjacent to the upset head (13) of rivet (10). The deformation to the substrate (11) is minimized because the cavity end (14) buckles outward and down onto substrate (11), while the shank (15) remains relatively constant in diameter. Thus, there is a fairly sharp

0150955

-10-

demarcation between the upset head and the shank (15). The depth of cavity (16) with respect to the adjacent substrate (11) affects this sharp demarcation as previously mentioned. Also note that in the upset head condition of Figure 3, there still remains a cavity (16), but that the cavity wall now essentially comprises two parts having somewhat of a frustum conical shape and having approximately equal height F, rather than one continuous cylinder as shown in Figure 1.

Figure 4 shows the typical condition which results when a solid rivet is installed on a relatively soft composite substrate using conventional techniques. The lower edge of the upset head (40a) of rivet (40) has a more gradual radius (40a) than the rivet of Figure 3. The rivet shank (45) shown in Figure 4 lacks a well defined location where the upset head begins to form. Thus there is a more gradual formation of the upset head which causes at least the area (41a) of the substrate (41) immediately adjacent to the upset head (40a), to be laterally deformed. If the substrates (41) and (42) are composites, as shown in Figure 4, this lateral deformation of the head tends to delaminate the composite. The expansion of shank (45) using conventional riveting techniques also causes delamination of the composite layers as illustrated (41b) and (42b).

The rivet installation tool (18) of this invention is shown in Figure 5 in greater detail. The tool includes an elongated tubular member (19) having an enlarged cylindrical anvil head (21). The outer axial end of the head (21) has a conical depression (24) having a frustum (22) projecting axially outwardly at its center. The smaller diameter of the frustum extends outwardly while the larger diameter or base blends or recurves into the smaller diameter portion of the depression (24), with the walls of the depression flaring radially outwardly and axially. The cross-section profile of the depression in

-11-

the upsetting tool head (19) resembles a flattened "W" with the frustum (22) forming the middle two legs of the "W."

The frustum (22) has a central aperture (23) through which anvil pin (20) slideably extends. Spring (28) extending between a plug (30) and the pin (20) preloads anvil pin (20) into a projecting position, yet allows the pin to be forced further into the hole in the frustum (22), if a force is exerted on the pin (20) which is greater than that of the spring (28). An annular shoulder (20a) on the pin engages a corresponding shoulder (19a) on the member (19) to stop or limit axial projection of the pin.

The anvil pin (20) is sized so that it fits within the rivet cavity (16) to insure that the material in the cavity end (14) collapses or buckles outward as the cavity end (14) is deformed or upset to form the rivet head. If the anvil pin (20) is too large, the cavity end (14) will grab or bind the pin (20) during upsetting and prevent movement of pin (20) into the upsetting tool (18). If anvil pin (20) is too small, it will not adequately support the tubular walls of cavity end (14). The anvil pin (20) also helps to position the installation tool over the rivet (10). This positioning not only prevents inadvertent damage to the substrate (11) and (12), but also assures frustum (22) is correctly aligned with the rivet (10) so that uniform column buckling of the cavity end (14) can occur.

The frustum (22) initiates outward buckling and collapse of the cavity end (14) of the rivet (10). As seen from Fig. 1, the diameter of the outer, smaller end of the frustum is about equal to the inner diameter of the rivet cavity. The included angle of the frustum (22) and the design of the adjacent portion (24) of the installation tool head (19) determines the size and shape of the upset rivet head. Preferably, the included angle $\phi$

0150955

-12-

of the frustum (22) is about 120°. The desired included angle θ between the outer legs of the recurved cone section (24), varies depending upon the material of the rivet (10), upon the type of upset head to be formed, and upon the material used for the substrate (11) immediately adjacent the upset head. Preferably, the angle θ is in a range of 100° to 140°.

If the material of the substrate (11) is soft relative to the material of the rivet (10), or if it is merely desired to prevent damage to the substrate (11), the upsetting force exerted by the installation tool (10) should be as low as possible. The smaller the included angle between the recurved cone (24), the lower the force needed to upset the rivet (10). Conversely, increasing the included angle between the sides of the recurved cone (24), increases the amount of force needed to upset the cavity end (14) of rivet (10).

The included angle θ between the sides of the recurved cone (24) also affects the size of the upset head (13) (Fig. 3) which is formed. A larger diameter of upset head can be achieved by using a larger included angle between the sides of the recurved cone (24). Generally accepted practice in aircraft manufacturing is to have the rivet diameter of the upset 1.5 times the original shank diameter, although an upset diameter of 1.3 times the shank diameter is acceptable. These upset sizes have been found to be sufficient to prevent pull through of the rivet under adverse loading conditions.

The material used in rivet (10) also affects the angle between the sides of recurved cone (24). As a general rule, harder rivet materials cannot be upset or cold worked to the extent that softer materials can. Therefore, a larger angle between the sides of the recurved cone (24) is often used for harder rivet materials. As previously mentioned, the larger the angle

-13-

between the sides of the recurved cone (24), the more force is required to set the rivet and form the head.

An important feature of this invention is the ability to upset rivet (10) without damaging the adjacent substrate (11), and with the additional ability of controlling the expansion of shank (15). When typical rivets are upset, the entire rivet shank is placed into compression with the result that the shank permanently expands, especially near the external surface adjacent the upset heads. The installation tool (18) has the ability to limit the amount of expansion of the shank (15) as well as the ability to minimize damage to the layer of substrate 11 immediately adjacent the upset head (13).

Referring to Figure 5, anvil pin (20) is axially movable against the resistance of spring (28). Varying the resistance of spring (28) can control the amount of force which is introduced into the bottom (16a) of cavity (16) by contact with anvil pin (20), and thus, introduced into the shank (15). The more force exerted on shank (15), the more the shank will expand. There are numerous methods readily available in the art to vary the force exerted on anvil pin (20). In addition to substituting for spring (28), a spring or springs having different or variable spring constants, the compression of the spring (28) can be varied by rotating the threshold retaining plug (30) to compress or release the initial spring preload.

The amount of expansion introduced into shank (15) can thus be controlled by the amount of force exerted by anvil pin (20). For composite substrates (11) and (12), it is desirable to have little shank expansion unless there is a clearance fit which is to be partially or entirely eliminated by shank expansion. Thus for composite substrates (11) and (12), the force exerted on anvil pin (20) will be low, preferably only sufficient to insure proper positioning of anvil pin (20) in the cavity (16),

-14-

and whatever additional forces are introduced by any friction or binding from the upsetting portion of cavity end (14) should those collapsing walls contact the anvil pin (20) and impede its travel into the body of upsetting tool (18). Eliminating the shank expansion and surface deformation adjacent the upset head (13), can eliminate the curvature or bowing inherent in riveted structures using interference fit rivets, or cavity rivets of previous inventions.

If the wall thickness of the annular portion of the cavity end (14) is made too thin, localized buckling occurs which causes small segments of the rivet wall to deflect, with the possibility that if the deflection is inward, the anvil pin (20) may experience binding. Thus, the wall thickness of the cavity end (14) should be sufficiently thick to ensure uniform columnar buckling occurs. The cavity walls (14) must contain a sufficient volume of material to form an acceptable upset head. Figure 8 and Table 1 show dimensions for cavity end (14) of rivet (10) which have been found suitable in practice when made out of either TiCb alloys or K Monel, when used in a standard upset head configuration on graphite epoxy substrates.

TABLE I

| Nominal Dia. | A Dia. | B Dia. | C Height |
|---|---|---|---|
| 3/32 | .050/.055 | .095/.096 | .090/.095 |
| 1/8 | .075/.080 | .126/.127 | .100/.110 |
| 5/32 | .090/.095 | .157/.158 | .130/.135 |
| 3/16 | .110/.115 | .188/.189 | .150/.160 |
| 1/4 | .145/.150 | .248/.249 | .200/.210 |

Experimentation has shown that an included angle of 120° for frustum (22) is suitable for a standard upset head (10b) as shown in Figures 2 and 4, when used with the rivet dimensions specified in Table 1. The included angle between the walls of recurved cone (24) is typically 100°

-15-

for materials such as TiCb and K Monel, having a sheer strength of approximately 50,000 psi. An angle of 140° is used for harder materials such as Beta 3 alloy. As previously indicated, 140° angle produces an upset head (10b) which is slightly larger in diameter and lower in height than does the 100° angle.

Figure 6 shows a double flush rivet configuration which provides a relatively smooth aerodynamic surface. The shape of the installation tool (18) used to form this flush configuration of upset head (13) in counter-sunk hole (49) is shown in Figure 7. As shown, the included angle φ of the frustum (22) is increased to 140° for the flush mounted head configuration. Additionally, the recurved cone (24) is not required, and has been eliminated. Table 2 shows the dimensions for rivet (10) which have been found preferable for use in the double flush mounting configuration when using K Monel as the rivet material for graphite epoxy substrates.

TABLE II

| Nominal Dia. | A Dia. | B Dia. | C Height |
|---|---|---|---|
| 3/32 | .050/.055 | .095/.096 | .060/.065 |
| 1/8 | .085/.090 | .126/.127 | .070/.075 |
| 5/32 | .105/.110 | .157/.158 | .080/.085 |
| 3/16 | .155/.160 | .188/.189 | .100/.105 |

An alternate rivet embodiment (50) is shown in Figure 8. This alternate embodiment has a shank (15) that is slightly reduced or undercut with respect to the cavity end (54) such that insertion of the rivet (50) through the holes (9) in the substrate ensures there will be a clearance fit between the shank (15) and the adjacent holes in the substrates being joined. This clearance fit is particularly desirable in composites which will tend to delaminate if there is an interference fit between the shank (45) and the adjacent substrates. The amount by

-16-

which the shank (45) is undercut can be varied, depending upon the amount of shank expansion, if any, occurring during upsetting of the rivet head (13). The amount of undercut can also accommodate any differences in thermal expansion between the rivet (10) and the adjacent substrates.

In yet another embodiment, the shank (15) or (55) of rivets (10) and (50) is work hardened so that the shank expansion is further reduced while facilitating the upsetting of the more maleable cavity ends (14) and (54). Work hardening the undercut shank (55) as shown in Figure 8 further insures a controlled expansion of shank (55) and provides a sharper demarcation between the shank and the formation of the upset rivet head (13).

-17-

I CLAIM:

1. A tool (18) for forming rivet heads (13) on a rivet (10) which has a head (10a), a shank (15), and a cavity (16) in one end of said rivet (10), said tool (18) having a projecting member (20) which can be inserted into a portion of said cavity (16), characterized in that said tool (18) includes:

a frustrum (22) for deforming a cavity end (14) of said rivet (10), said frustrum (22) having a central aperture (23);

a projecting member (20) slideably extending through said aperture (23) and fitting into said rivet cavity (16) when said tool (18) is properly aligned with said rivet (10), to insure outward collapse of the cavity end (14) of the rivet (10) during deformation; and

a resilient member (28) urging said projecting member (20) through said aperture (23) and against said rivet (10), while allowing the retraction of said projecting member (20) as it is forced back through said aperture (23) by contact with the bottom (16a) of said rivet cavity (16).

2. A tool (18) as defined in Claim 1 wherein said frustrum (22) has an included angle $\psi$ of about 120 degrees.

3. A tool (18) as defined in Claim 1, further characterized by a recurved portion (24) beginning adjacent the base of the frustrum (22) and diverging outward towards the end of said frustrum (22) to shape the upset head (23) as it is formed.

4. A tool (18) as as defined in Claim 4, wherein said recurved portion (24) forms an included angle $\theta$ in the range of 100-140 degrees.

5. A tool (18) as defined in Claim 1, wherein said resilient member (28) comprises a coil spring (28), and further characterized in that said tool (18) contains a housing (19) that supports said frustrum (22), said housing (19) limiting the expansion of said spring (28).

6. A tool (18) as defined in Claim 1, further characterized by an extension stop (19A) which cooperates with an engaging portion (20A) on projecting member (20) in order to limit the amount by which said projecting member (22) can extend through said aperture (23) in said frustrum (22).

7. A tool (18) as defined in Claim 1, further characterized in that the resilient member (28) is selected to exert a predetermined force on the shank (15) during formation of the deformed head (13), to control the deformation of the shank (15) and to limit the deformation of the substrates (11) and (12) immediately adjacent the deformed head (13).

8. A tool (18) as defined in Claim 1, used in combination with at least two substantially parallel abutting members (11) and (12) having corresponding holes (9) through which said cavity rivet (10) is inserted so that tool (18) and deform the cavity end (14) to fasten said members (11) and (12) together, further characterized in that the tool (18) forms the deformed head (13) so that the bottom (16a) of said cavity (16) in said rivet (10) ends in the range of about .015 inches below, to 0.15 inches above, the external surface of the joined structural member nearest the deformed head (13) of the rivet (10) after said rivet (10) is installed by said tool (18).

9. A tool (18) as defined in Claim 8, further characterized in that the force exerted by the projecting member (20) on the bottom (16a) of cavity (16) cooperates with the depth of the cavity (16) and further cooperates with the deforming force exerted on the cavity end (14) by the tool (18) to control the location at which the formation of the deformed head (13) begins forming on the shank (15) so that the deformed head (13) forms without

0150955

-19-

substantially deforming the member (11) or (12) immediately adjacent the deformed head (13).

10. A tool (18) as defined in Claim 8 further characterized in that the shank (15) of the rivet (10) is work hardened to cooperate with the tool (18) to control the deformation of the shank (14) and to control the location on the shank (15) at which the deformed head (13) is formed on the shank (15) by the tool (18).

11. A tool (18) as defined in Claim 2 further including at least two substantially parallel abutting members (11) and (12) having corresponding holes (9) through which cavity rivet (10) is inserted so that tool (18) can deform the cavity end (14) to fasten said members (11) and (12) together, further characterized in that the external surface of one of the joined members has a counter sunk hole (49) to receive a flush deformed head (13) when the rivet (10) fastens the members (11) and (12) together, the bottom (16a) of the cavity (16) ending between the bottom of the counter sunk hole (49) and the external surface of the member (11) or (12) containing said counter sunk hole (49).

12. A tool (18) as defined in Claim 11, further characterized in that the force exerted by the projecting member (20) on the bottom (16a) of cavity (16) cooperates with the depth of the cavity (16) and further cooperates with the deforming force exerted on the cavity end (14) by the tool (18) to control the location at which the formation of the deformed head (13) begins forming on the shank (15) so that the deformed head (13) forms without substantially deforming the member (11) or (12) immediately adjacent the deformed head (13).

13. A tool (18) as defined in Claim 1, further including at least two substantially parallel abutting members (11) and (12) having corresponding holes (9) through which cavity rivet (10) is inserted so that tool (18) can deform the cavity end (14) to fasten said

-20-

structural members (11) and (12) together, further characterized in that the shank (15) of said rivet (10) is of a smaller diameter than the cavity end of (14) of said rivet (10) so that there is a clearance between the shank (15) and the holes (9) in the joined structural members (11) and (12) before the deformed head (13) is formed by tool (18), the diameter of the shank (15) cooperating with the force exerted by projecting member (20) on the bottom (16a) of cavity (16) and further cooperating with the force exerted by tool (18) on the cavity end (14), so that during the formation of the deformed head (13), the shank (15) expands to form a predetermined fit with the holes (9).

14. A tool (18) as defined in Claim 13, further characterized in that the bottom (16a) of the cavity (16) ends not more than .015 inches above, nor more than .015 inches below the surface of the member (11) or (12) nearest the deformed head (13) which is formed when the rivet (10) is installed, the cavity depth cooperating with said tool (18) to control the location on the shank (15) at which the deformed head (13) is formed by the tool (18).

15. A tool (18) as defined in Claim 7, 9, or 12, further characterized in that members (11) and (12) are made of composite materials, and the tool (18) forms the deformed head (13) such that the composite material immediately adjacent the deformed head (13) is not delaminated.

16. A tool (18) as defined in Claim 7, 9, or 12, further characterized in that members (11) and (12) are made of composite materials, the rivet (10) is made of a work hardening material selected from the class of titanium-columbium (TICB) alloys or K-monel, and the tool (18) forms the deformed head (13) such that the composite material immediately adjacent the deformed head (13) is not delaminated.

-21-

17. A method for joining a plurality of parallel, abutting structural members (11) and (12) with rivet (10), without causing a bending of those joined members from the rivets (10), by forming axially aligned holes (9) through the members (11) and (12), inserting through said holes (9) a rivet (10) having a shank (15) with a head (10a) on one end and a cavity end (14) with a cavity (16) on the opposite end, until the head (10a) contacts one of the members (11) or (12) which are to be joined, and then deforming the cavity end (14) to form a deformed head (13) and fasten said members (11) and (12) together, further characterized by the steps of:

applying an initial deforming force to the cavity end (14) of the rivet (10) by a projecting frustrum (22) on a tool (18), so as to initiate outward collapse of the cavity end (14) of rivet (10);

applying a deforming force to the cavity end (14) of the rivet (10) by using said tool (18) to cause the cavity end (14) to buckle outwards and downwards to form a deformed head (13);

placing a removable projecting member (20) in the cavity (16) to insure that the cavity end (14) buckles outward during the formation of the deformed head (13), said projecting member (20) slidably extending through an aperture (23) in said frustrum (22);

resiliently forcing the projecting member (20) against a bottom (16a) of the hole (16) with a predetermined force; and

controlling the deformation of the joined member (11) or (12) adjacent the deformed heads (13) by controlling the location of the bottom (16a) of the cavity (16) with respect to the external surface of the member (11) or (12) immediately adjacent the deformed head (13) so as to minimize the deformation which the deformed head (13) exerts on the external

-22-

surface of the immediately adjacent member (11) or (12).

18. The method as defined in Claim 17, further characterized by the step of:

controlling the deformation of the shank (15) by controlling the force which the projecting member (20) exerts against the bottom (16a) of the hole (16).

19. The method as defined in Claim 17, further characterized by the step of:

locating the bottom (16a) of the cavity (16) so that it occurs about .015 inches below to about .015 inches above the external surface of the structural member (11) or (12) immediately adjacent the deformed head (13).

20. The method as defined in Claim 17, further characterized by the step of:

work hardening the shank (15) of rivet (10) in order to control the deformation of the shank (15) during formation of the head (13).

21. The method as defined in Claim 17, characterized by the further step of:

undercutting the shank (15) of the rivet (10) so that the diameter of the shank (15) is a controlled amount smaller than the hole (9) into which the rivet (10) is inserted so that during formation of the head (13) the projecting member (20) of tool (18) will deform the shank (15) by a predetermined amount to obtain a predetermined fit.

22. A rivet (10) having a head (10a), a shank (15), and a cavity (16) in one end, further characterized in that the shank (15) is work hardened to control the deformation of the shank (15) during installation of the rivet.

23. A rivet (10) having a head (10a), a shank (15), a cavity end (14) containing a cavity (16) in one end, further characterized in that the shank (15) is undercut

-23-

so that the shank (15) is of a smaller diameter than the cavity end (14) so that the shank (15) can be deformed during installation to attain a predetermined fit with a hole (9) through the members (11) and (12) which are being fastened by the rivet (10).

0150955

Fig. 1

18
21
22
24
20
14
9
16
15
16a
11
12
10a
10

Fig. 2

21
18
20
13
11
16
15
10
12

Fig. 4 (PRIOR ART)

40
40a
41a
41b
41
42b
42
45

Fig. 3

10b
16
11
9
10

0150955

2/2

Fig. 7

Fig. 5

Fig. 6

Fig. 8